# EUROPEAN PATENT SPECIFICATION

(11) **EP 3 671 565 B1**
(45) Date of publication and mention of the grant of the patent: **05.07.2023**
(21) Application number: 18846614.8
(22) Date of filing: 31.07.2018
(51) Int. Cl.: G06M 7/00, A01K 61/95, G01S 15/96, G06M 1/10, G06M 11/00

(54) **FISH COUNTING DEVICE, FISH COUNTING SYSTEM, AND FISH COUNTING METHOD**
FISCHZÄHLVORRICHTUNG, FISCHZÄHLSYSTEM UND FISCHZÄHLVERFAHREN
DISPOSITIF DE COMPTAGE DE POISSONS, SYSTÈME DE COMPTAGE DE POISSONS ET PROCÉDÉ DE COMPTAGE DE POISSONS

(30) Priority: 16.08.2017 JP 2017157255
(43) Date of publication of application: 24.06.2020
(73) Proprietor: Furuno Electric Co., Ltd., Nishinomiya-City, Hyogo 622-8580 (JP)
(72) Inventor: YAMAGUCHI, Takeharu, Nishinomiya-City Hyogo 662-8580 (JP); ITO, Masanori, Nishinomiya-City Hyogo 662-8580 (JP); YASUOKA, Takami, Minamiuwa-Gun Ehime 798-4342 (JP)
(74) Representative: CSY London
(86) International application number: PCT/JP2018/028529
(87) International publication number: WO 2019/035346

(56) References cited:
- WO-A2-95/19103
- GB-A- 2 503 351
- JP-A- H0 251 088
- JP-A- H11 296 650
- JP-A- 2005 102 638
- JP-A- 2012 225 667
- US-A- 5 692 064

## Description

### TECHNICAL FIELD

The present disclosure mainly relates to a fish counting device which counts fish moving between two fishtanks.

### BACKGROUND ART

When cultivating fish, using a net-type fishtank is the main stream. By this method, a net is suspended underwater and fish are raised within a space formed inside the net.

In the cultivation using the fishtank, if the number of cultivating fish accommodated in one fishtank is too many, fish is exposed to stress, leading to illness etc. On the other hand, if the number of cultivating fish is too little, a profit cannot be gained. Therefore, it is very important for a culture entrepreneur to keep the accommodation density of fish inside the fishtank suitable.

In order to adjust the accommodation density, the fish raised in one fishtank is conventionally divided into a plurality of fishtanks or thinned out. At this time, in order to realize the intended accommodation density, it is demanded that fish coming into the fishtank or fish coming out from the fishtank is counted accurately.

In this regard, as disclosed in Patent Documents 1-4 and Nonpatent Documents 1 and 2, various technologies for counting fish etc. are proposed.

Patent Document 1 discloses a counting device of live fish. In this counting device of live fish, a count frame body is disposed at the centre of a collecting net which is disposed so as to divide the fishtank vertically. The counting device is configured to count the number of live fish which passes through the count frame from above to below by bringing the count frame toward an upper surface from the bottom of the fishtank. The count frame body is configured in a lattice shape and can detect the live fish passing through each gap by a counting sensor. The counting sensor is comprised of a plurality of arrayed light signal emitting parts and light signal sensing parts.

Patent Document 2 discloses a live fish counting device inside a fishtank. In this live fish counting device, a passage through which fish can pass only one by one at a time is comprised of a guide member. Fish which passes through this passage is detected one by one at a time by acquiring an acoustic wave which is a reflection of an acoustic wave transmitted from an ultrasonic sensor on the fish. The ultrasonic sensor is oriented downwardly so that the acoustic wave hits the guide member.

Patent Document 3 discloses a method of measuring a fish count using an ultrasonic wave. By this method of measuring the fish count, ultrasonic sensors are arrayed in the depth direction in a regular course for fish along which fish moves. The ultrasonic sensors discharge the ultrasonic waves in the width direction of the regular course for fish. A two-dimensional ultrasonic image is created based on the detection results of the respective ultrasonic sensors, and the number of fish is counted based on the geometric feature of the signs of fish which appear in the image.

Patent Document 4 discloses a feed monitoring device for an aquatic life. In this feed monitoring device, a sonar which carries out a rotary scan in a horizontal plane is installed below a fishtank, and it is configured to count food which fell from the fishtank without being eaten by fish in the fishtank by tracking an echo.

Nonpatent Document 1 discloses an acoustic method of automatically counting fish culture by using an underwater detection device of DIDSON which is a kind of sonar. DIDSON is directed substantially horizontally to a channel along which fish moves when moving between two fishtanks. Tracking is suitably performed for an echo of detected fish, and when the tracking echo disappears, it counts as one fish.

Nonpatent Document 2 discloses a method of acoustically counting sweetfish which swims a river by using DIDSON. DIDSON is installed so as to detect a horizontal image of the river. Tracking of an echo is performed so that sweetfish which goes to upstream of the river can be detected in distinction from a leaf which falls into the river and moves to downstream. When the tracking echo disappears, it is counted as one fish.

### [Reference Documents of Conventional Art]

### [Patent Documents]

Patent Document 1: JP2011-188806A
Patent Document 2: JP3747308B2
Patent Document 3: JP2589046B2
Patent Document 4: US6317385B1

### [Nonpatent Documents]

Nonpatent Document 1:Han J., Asada A., Honda N. et al., Fisheries Science 75, p.p.1359-1367 (2009)
Nonpatent Document 2: Han J., Asada A., Mizoguchi M., Journal of the Marine Acoustics Society of Japan, 36(4), p.p.250-257 (2009)

JP H02 51088 A discloses a static capacity type fish pump equipped with a transmitter to transmit a propagating energy wave to a closed tank and a receiver to receive the propagating energy wave transmitted. An amount of fish sucked into the closed tank can be measured from the level of the propagating energy wave received with the reception sensor.

However, it is difficult for any of the configurations of the conventional arts to distinguish the echo of fish from the echo of the passage detected using the ultrasonic wave, and therefore, there is room for an improvement because the counting result contains error, and because it cannot be realized by a simple configuration.

The present disclosure is made in view of the above situation, and one purpose thereof is to realize a fish counting device which can simply count fish at low cost.

### Summary

According to one aspect of the present invention there is provided a fish counting system as defined in claim 1.

The processor outputs to the ultrasonic transducer a transmission signal to drive the ultrasonic transducer, and acquire a number of fish passing through the ultrasonic beam and moving from the path to the first fishtank based on an echo signal inputted from the ultrasonic transducer that received a reflection wave.

According to this, the number of fish which moves from the second fishtank to the first fishtank via the path can be measured with a simple configuration, without being influenced by a net etc. constituting the path.

In the fish counting device described above, the ultrasonic beam is preferably a fan beam having a fan shape that spreads in a width direction of an opening that connects the path to the first fishtank as the ultrasonic beam moves away from the ultrasonic transducer.

According to this, the ultrasonic beam for measuring the fish count can be disposed so as to cover the opening with the simple configuration.

In the fish counting device described above, the fan beam is preferably disposed substantially parallel to the opening.

According to this, by disposing the fan beam close enough to the opening, it is possible to prevent an omission in detection in which the fish passing through the opening and moving to the first fishtank is not captured by the fan beam.

In the fish counting device described above, a directivity of the fan beam is preferably changeable according to a species of the fish.

According to this, by changing the directivity of the fan beam according to the species of the fish, etc. the number of fish can be accurately measured in various situations.

In the fish counting device described above, the processor tracks an echo, counts the tracked echoes moving deeper as time passes, and acquires the number of fish moving from the path to the first fishtank based on the counted tracked echoes.

According to this, the number of fish that move from the second fishtank to the first fishtank can be accurately measured while being distinguished from fish staying at a bottom of the first fishtank.

In the fish counting device described above, the processor preferably counts the tracked echoes whose moving speed in a depth direction satisfies a given condition.

According to this, the fish that move to the first fishtank and dive obliquely can be counted appropriately.

In the fish counting device described above, the processor preferably counts the tracked echoes whose change in echo intensity satisfies a given condition.

According to this, since the intensity of the echo derived from the same fish does not significantly change while tracking, the fish can be appropriately counted.

In the fish counting device described above, the processor preferably counts echoes based on the echo signal, corrects the counted echoes, and acquires the number of fish that moves from the path to the first fishtank based on the corrected counted echoes.

According to this, since the correction can be performed in consideration of the omission in the count, for example, caused by a plurality of fish simultaneously passing through the ultrasonic beam, a fall of the measurement accuracy can be prevented appropriately.

In the fish counting device described above, the ultrasonic transducer is preferably a single ultrasonic transducer.

According to this, the simple configuration of the fish counting device can be realized.

A fish counting system including the fish counting device and the path is provided.

According to this, the number of fish which move from the second fishtank to the first fishtank via the path can be measured with the simple configuration, without being influenced by the net etc. constituting the path.

In the fish counting system described above, the path is formed by connecting an opening of the first fishtank with an opening of the second fishtank directly or through a tunnel.

According to this, the pass through which the fish passes can be realized reasonably.

In the fish counting system described above, a cross-section of a plane cutting perpendicularly a passing direction of the fish at a location where the path becomes the narrowest preferably has a size through which a plurality of fish is able to pass simultaneously.

According to this, the fish can be moved from the second fishtank to the first fishtank in a short time, while the number of fish is counted.

In the fish counting system described above, a bottom of the first fishtank is preferably located deeper than a deepest part of an opening that connects the path to the first fishtank.

The fish, depending on the species, dives toward the bottom of the first fishtank, after moving from the second fishtank to the first fishtank. By the bottom of the first fishtank being located lower than the opening, the counted fish which once moved to the first fishtank does not easily approach the opening, and therefore, a false count can be prevented.

According to another aspect of the present invention there is provided a method of counting fish as defined in claim 12.

According to this, the number of fish which moves from the second fishtank to the first fishtank via the path can be counted with a simple configuration, without being influenced by a net etc. constituting the path.

### BRIEF DESCRIPTION OF DRAWINGS

Fig. 1 is a perspective view illustrating the entire configuration of a fish counting system including a fish counting device according to one embodiment of the present disclosure.
Fig. 2 is a schematic cross-sectional view illustrating a configuration of the fish counting system.
Fig. 3 is a block diagram illustrating an electric configuration of the fish counting device.
Fig. 4 is an echogram illustrating an echo acquired by an ultrasonic transducer.
Fig. 5 is an enlarged echogram illustrating an area enclosed with white lines in the echogram of Fig. 4.

### MODE FOR CARRYING OUT THE DISCLOSURE

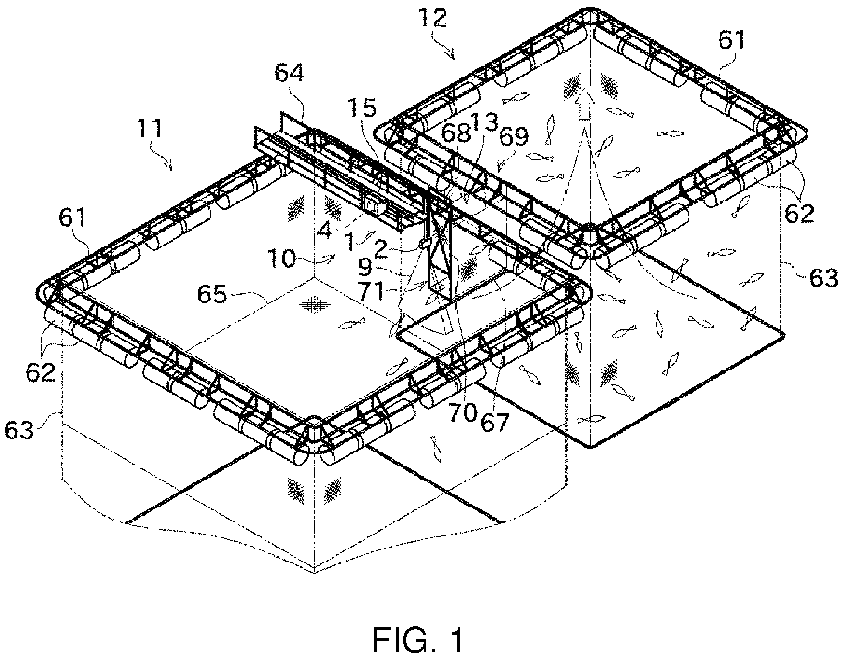

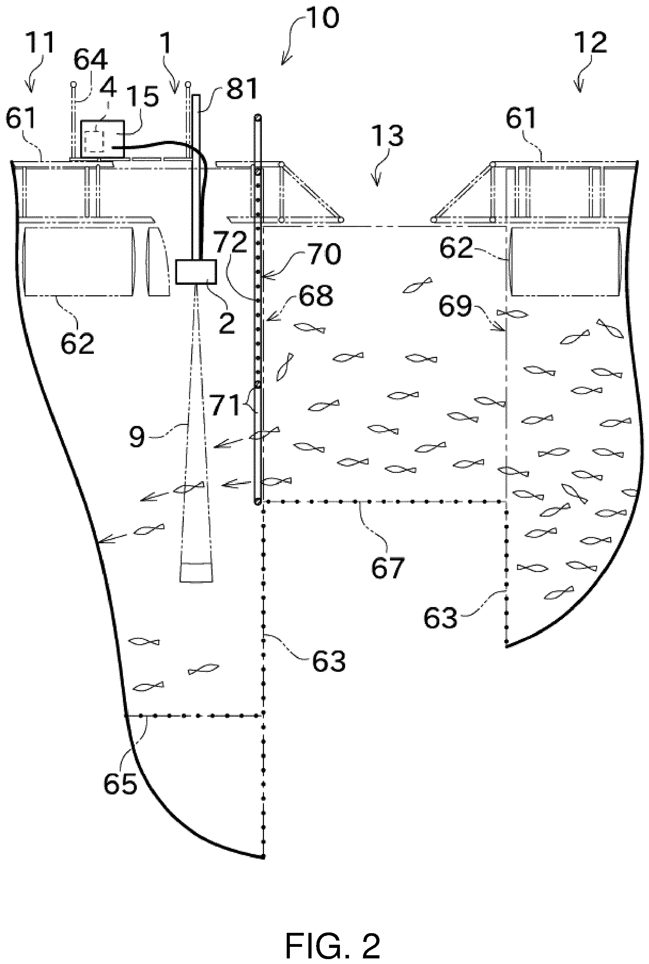

Next, one embodiment of the present disclosure is described with reference to the drawings. Fig. 1 is a perspective view illustrating the entire configuration of a fish counting system 10 containing a fish counting device 1 according to one embodiment of the present disclosure. Fig. 2 is a schematic cross-sectional view illustrating a configuration of the fish counting system 10.

The fish counting system 10 of this embodiment illustrated in Fig. 1 is used by an aquaculturist who cultivates fish using a first fishtank 11 and a second fishtank 12.

As illustrated in Fig. 1, the first fishtank 11 and the second fishtank 12 is installed on the sea surface. A narrow path 13 is formed between the first fishtank 11 and the second fishtank 12.

Each of the first fishtank 11 and the second fishtank 12 is configured as a net-type fishtank, and is provided with a frame 61, floats 62, and a net 63.

The frame 61 is formed so as to be a loop configuration in a plan view. A plurality of floats 62 is attached to the frame 61, and, thereby, the frame 61 can float on the water surface. The frame 61 is connected to weights at a sea bed through ropes for mooring which are not illustrated.

An upper end of the net 63 is fixed to the frame 61. The net 63 is suspended so as to divide underwater to form a closed space, and fish is bred in this space (also referred to as the "breeding space").

In the first fishtank 11, a pier 64 where various works related to cultivation are performed is fixed onto the frame 61. Moreover, a horizontal partition net 65 is disposed at an intermediate part of the net 63 of the first fishtank 11 in the height direction so that it vertically divides the space surrounded by the net 63. Therefore, in the first fishtank 11, the partition net 65 becomes substantially the bottom of the first fishtank 11.

The first fishtank 11 and the second fishtank 12 are disposed close to each other. A rectangular recess 68 which opens upwardly is formed in an upper edge part of the net 63 of the first fishtank 11, and a recess 69 of the same shape is formed in an upper edge part of the net 63 of the second fishtank 12. Two recesses 68 and 69 are disposed so as to oppose to each other.

Between the first fishtank 11 and the second fishtank 12, a connection net 67 which opens upwardly is disposed so as to connect the two recesses 68 and 69. Therefore, a path 13 through which fish can pass is formed so as to connect the first fishtank 11 with the second fishtank 12.

Although the upper part of the connection net 67 is opened as described above, since the upper part is the water surface, fish cannot move upward. Therefore, the path formed in the connection net 67 has a substantially tunnel shape. Note that a connection net having a configuration in which the upper part is not opened may also be used.

A passage restriction frame 70 is attached to the recess 68 formed in the net 63 of the first fishtank 11. This passage restriction frame 70 is configured in a frame shape which is narrow and elongated in the vertical direction by using bar-shaped metal etc. The width of the passage restriction frame 70 coincides with the width of the recess 68. An upper part of the passage restriction frame 70 is fixed to the frame 61 of the first fishtank 11.

As illustrated in Figs. 1 and 2, a rectangular opening frame 71 is formed in a lower part of the passage restriction frame 70. This opening frame 71 is formed in, for example, a square with 1m in height and 1m in width, and is disposed at a lowermost part of the recess 68. An opening through which fish can pass is formed in the opening frame 71, and the path 13 described above is connected with the first fishtank 11 through this opening.

As illustrated in Fig. 2, among a part of the passage restriction frame 70 which is submerged underwater, a prevention net 72 which prevents passage of fish is attached to parts other than the opening frame 71. Therefore, fish which passed the path 13 from the second fishtank 12 cannot move to the first fishtank 11, unless it passes through the opening of the opening frame 71. The opening inside the opening frame 71 is the narrowest part of the path 13.

The fish counting system 10 of this embodiment is provided with the fish counting device 1, in addition to the path 13. The fish counting device 1 is provided with an ultrasonic transducer 2 which can transmit an ultrasonic beam 9 underwater in the first fishtank 11. As illustrated in Fig. 2, the ultrasonic transducer 2 is attached to a lower end part of a bar-like jig 81 fixed to the pier 64 so as to face downwardly.

The ultrasonic transducer 2 is provided with a transducer element (not illustrated), and this transducer element is configured to transmit the ultrasonic beam 9 underwater in the first fishtank 11.

In this embodiment, the ultrasonic beam 9 is a fan beam, and its transmitting direction is substantially oriented downwardly in the vertical direction. Moreover, the ultrasonic transducer 2 is disposed with a certain amount of gap from the net 63 where the opening frame 71 is disposed in the first fishtank 11. Therefore, the ultrasonic beam 9 transmitted from the ultrasonic transducer 2 will neither hit the net 63 disposed at the side surface of the first fishtank 11, nor the connection net 67 or the passage restriction frame 70.

The ultrasonic beam 9 has a shape with a wide directivity in a direction parallel to the width direction of the opening plane formed in the opening frame 71, and a narrow directivity in a direction perpendicular to the opening plane. As a result, as illustrated in Fig. 1, a fan-shaped substantially plate-shaped beam is formed, and this fan shape opposes the opening plane of the opening frame 71 with a certain amount of interval. The fan shape of the ultrasonic beam 9 is a shape which spreads in the width direction of the opening of the opening frame 71 as it moves away from the ultrasonic transducer 2. Moreover, this fan shape is disposed substantially parallel to the opening plane of the opening frame 71.

The directivity of the ultrasonic beam 9 in a direction parallel to the width direction of the opening plane of the opening frame 71 is set wide enough so that it becomes 30° or more at a 3dB beam width. Moreover, the opening frame 71 through which fish can pass is disposed well below the ultrasonic transducer 2. Therefore, the fan shape of the ultrasonic beam 9 substantially overlaps with the entire opening plane, when seen in a direction perpendicular to the opening plane. Moreover, the ultrasonic beam 9 is formed close enough to the opening formed in the opening frame 71. Therefore, almost all the fish which passes through the opening frame 71 and enters into the first fishtank 11 can be detected by the ultrasonic transducer 2.

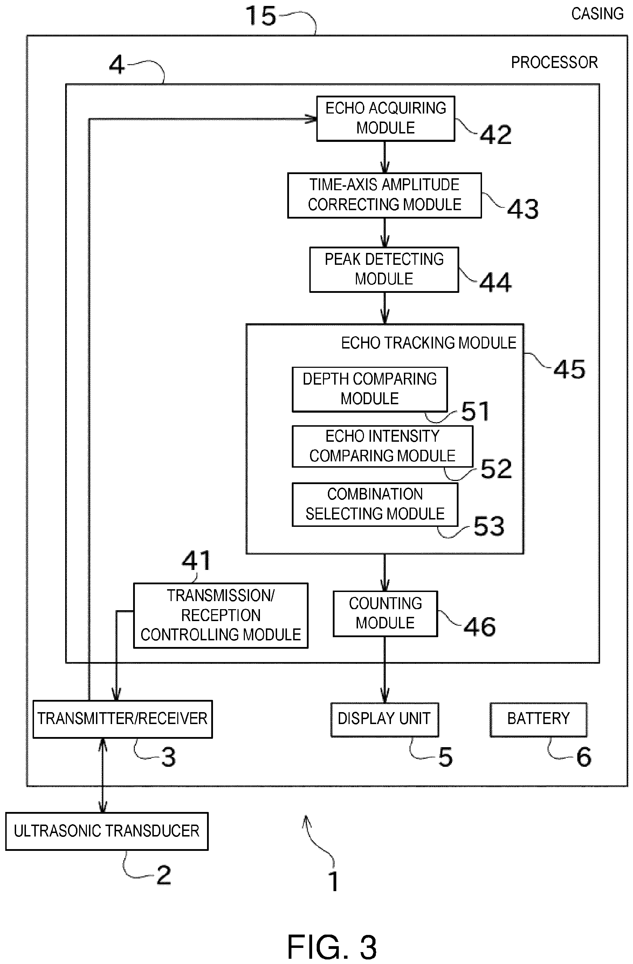

Next, a configuration of the fish counting device 1 provided to the fish counting system 10 is described in detail with reference to Fig. 3 etc. Fig. 3 is a block diagram illustrating an electric configuration of the fish counting device 1.

As illustrated in Fig. 3, the fish counting device 1 includes an ultrasonic transducer 2, a transmitter/receiver 3, a processor 4, a display unit 5, and a battery 6.

The transmitter/receiver 3, the processor 4, the display unit 5, and the battery 6 among the configuration of the fish counting device 1 are accommodated inside a casing 15 installed on the pier 64. Note that, in Figs. 1 and 2, only the processor 4 among the configuration inside the casing 15 is schematically illustrated.

The ultrasonic transducer 2 is provided with one or more transducer elements (not illustrated) belonging to a single channel. This transducer element converts into an ultrasonic wave an electrical signal inputted from the transmitter/receiver 3 into the ultrasonic transducer 2, and transmit the ultrasonic wave in the fan-beam shape underwater in the first fishtank 11. Moreover, the transducer element receives a reflection wave of the transmitted ultrasonic wave reflected on fish, and convert it into an echo signal which is an electrical signal. The ultrasonic transducer 2 outputs the generated echo signal to the transmitter/receiver 3.

The transmitter/receiver 3 outputs a transmission signal which is an electrical signal for causing the ultrasonic transducer 2 to transmit the ultrasonic wave. Moreover, the transmitter/receiver 3 accepts an input of the echo signal received from the ultrasonic transducer 2, generate a reception signal by performing processing such as digitization, and output it to the processor 4. Therefore, the reception signal outputted from the transmitter/receiver 3 is a digitized echo signal.

The processor 4 outputs the transmission signal to the transmitter/receiver 3 to control the transmission of the ultrasonic wave from the ultrasonic transducer 2. Moreover, the processor 4 acquires the number of fish (fish count) which pass through the ultrasonic beam 9 in real time when the fish enters into the first fishtank 11 through the path 13 from the second fishtank 12 based on the reception signal inputted from the transmitter/receiver 3 (i.e., the echo signal inputted from the ultrasonic transducer 2 via the transmitter/receiver 3). The acquired number of fish is outputted to the display unit 5. Note that the detailed configuration of the processor 4 will be described later.

The display unit 5 is configured, for example, as a liquid crystal display, and displays in real time the number of fish counted by the processor 4.

The battery 6 supplies electric power to the transmitter/receiver 3, the processor 4, the display unit 5, etc. The battery 6 is configured to be chargeable, and when it becomes empty, it can be replaced by another charged battery.

Next, a configuration of the processor 4 is described in detail. As illustrated in Fig. 3, the processor 4 includes a transmission/reception controlling module 41, an echo acquiring module 42, a time-axis amplitude correcting module 43, a peak detecting module 44, an echo tracking module 45, and a counting module 46.

Specifically, the processor 4 is configured as a known computer, and is comprised of a CPU, a ROM, and a RAM. The ROM stores beforehand a program for implementing a method of measuring the fish count of the present disclosure. By collaboration of the hardware and the software, the processor 4 can operate as the transmission/reception controlling module 41, the echo acquiring module 42, the time-axis amplitude correcting module 43, the peak detecting module 44, the echo tracking module 45, the counting module 46, etc.

The transmission/reception controlling module 41 transmits a suitable command signal to the transmitter/receiver 3 to control the ultrasonic transducer 2 to repeatedly transmit the ultrasonic wave at a fixed time interval and receive a reflection wave between transmissions. Each transmission of the ultrasonic wave is referred to as "ping," and the transmission cycle of the ultrasonic wave is referred to as a "ping rate." The ping rate is, for example, 50 milliseconds.

The echo acquiring module 42 acquires the reception signal (hereinafter, referred to as "echo data") inputted from the transmitter/receiver 3 for every ping. The echo acquiring module 42 outputs the obtained echo data to the time-axis amplitude correcting module 43.

The time-axis amplitude correcting module 43 performs a time-axis amplitude correction to the echo data acquired from the echo acquiring module 42. Since this correction is well known, the detailed description is omitted, but it is a correction in which the sensitivity is varied with progress of time from the transmission timing of the ultrasonic wave in order to correct a difference in the intensity of the reflection echo at a shallow water location and a deep water location. The time-axis amplitude correcting module 43 outputs the corrected echo data to the peak detecting module 44.

The peak detecting module 44 performs envelope processing to the echo data inputted from the time-axis amplitude correcting module 43, and detects an envelope having a peak larger than a given peak value as an echo peak with a high possibility of being a fish. The peak detecting module 44 outputs the intensity of the echo signal and the position in the depth direction of a source of the echo to the echo tracking module 45 for every detected echo peak. Note that, if the depth of the echo source greatly deviates from a depth range of the opening formed in the opening frame 71 (in detail, if the depth is too shallow or too deep), it is excluded from the candidates of which information is outputted to the echo tracking module 45.

The echo tracking module 45 tracks the echo peak based on the information on the echo peak inputted from the peak detecting module 44. In the following description, the echo of which the echo peak is tracked in this way is referred to as the "tracked echo." This echo tracking module 45 includes a depth comparing module 51, an echo intensity comparing module 52, and a combination selecting module 53.

The depth comparing module 51 compares the depths of the echo source between the echo peak detected by the last ping and the echo peak detected by the current ping.

This is based on the knowledge acquired from the past researches of the present inventor that, for at least a particular fish species (e.g., red sea bream), as illustrated by an arrow in Fig. 2, the fish has a habit of diving obliquely toward the bottom immediately after the fish passes through the opening frame 71. The present inventor measured a diving speed of the fish in the depth direction, and most measurements fall within a range of 0.2m/s or faster and 1.2m/s or slower.

The echo intensity comparing module 52 of Fig. 3 compares the echo intensities between the echo peak detected by the last ping and the echo peak detected by the current ping.

The combination selecting module 53 selects, based on the results of comparison by the depth comparing module 51 and the echo intensity comparing module 52, a combination of the echo peak of the last ping and the echo peak of the current ping in which the depth of the echo source is increasing at a rate of 0.2 m/s or faster and 1.2m/s or slower, and further, the echo intensity does not greatly change between the pings. According to this combination, the echo peak of the last ping and the echo peak of the current ping are associated with each other, as they are pings from the same echo source (i.e., the same fish).

The echo tracking module 45 repeats the above processing each time the information on the echo peak is newly inputted from the peak detecting module 44. Therefore, the echo peak with the high possibility of being fish can be tracked continuously. The echo tracking module 45 generates tracking information on the tracked echo peak, and output it to the counting module 46.

The counting module 46 counts echo peaks that have been tracked and that satisfy a given condition (e.g., the echo peaks for which the tracking is continued for more than a given number of pings) based on the tracking information inputted from the echo tracking module 45. Note that, echoes whose moving speed in the depth direction do not satisfy the condition, and echoes whose change in the echo intensity do not satisfy the condition are not counted since the tracking is substantially stopped. Thus, the counting module 46 counts only the tracked echoes which satisfy the given conditions of the moving speed in the depth direction and the change in the echo intensity to improve the measurement accuracy. The counting module 46 outputs in real time the current number of fish to the display unit 5.

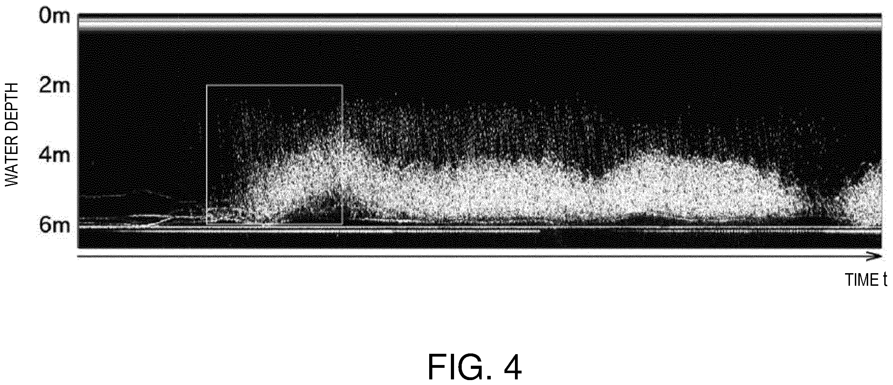

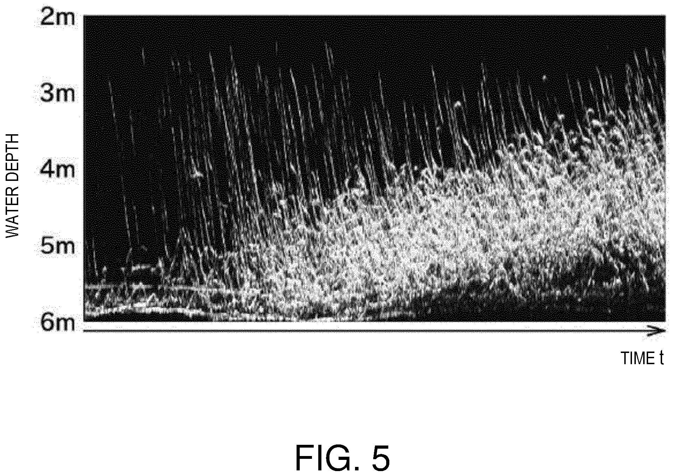

Next, an actual counting work using the fish counting system 10 of this embodiment is described. Figs. 4 and 5 are echograms illustrating one example of the echo acquired by the ultrasonic transducer 2.

For example, a case is considered in which fish raised in the second fishtank 12 is divided into the first fishtank 11 and the second fishtank 12. In this case, in a state where there is no fish in the first fishtank 11, a worker lifts the bottom of the net 63 of the second fishtank 12 where the fish exists by using a crane etc., as illustrated by a chain line in Fig. 1. As a result, since the density of fish increases in the second fishtank 12, the fish which dislikes being squeezed passes through the path 13, pass through the opening frame 71, and then move to the first fishtank 11.

Note that, the lift by the crane may deform the net 63 of the second fishtank 12, thereby affecting the shape of the connection net 67. Moreover, although the path 13 is comprised of the connection net 67 so as not to easily scratch the fish, the connection net 67 may warp as a large number of fish pass therethrough. However, in this embodiment, the passage restriction frame 70 and the opening frame 71 is made of harder material (specifically, metal) than the connection net 67 etc. Therefore, the position and the shape of the opening where the path 13 connects to the first fishtank 11 (i.e., a termination part of the path 13) can be stably maintained.

The echo signal accompanying the fish having passed the ultrasonic beam 9 at this time is illustrated in Fig. 4. In the echogram of Fig. 4, similar to the echo image displayed on a fish finder, the vertical direction corresponds to the water depth, and the horizontal direction corresponds to time. In the image, a bright part is the echo, and it is displayed whiter as the intensity increases. Note that, when acquiring the echogram of Fig. 4, the depth of the opening frame 71 is set so that an upper end is located at a water depth of 2m and a lower end is located at a water depth of 3m.

As illustrated in Fig. 4, it can be seen that low-density echoes are detected in a water-depth range from about 2m to about 4m. Fig. 5 is an enlarged view of an area enclosed by a white rectangle in Fig. 4, where echoes extending substantially linearly in a downward right direction appear at the water depth from about 2m to about 4m. Each of the thin-line echoes corresponds to one fish which passes through the ultrasonic beam 9. The reason of the echo descending to the right is the habit of the fish in which the fish swims toward the bottom immediately after passing through the opening frame 71, as described above. In the water-depth range from about 4m to about 6m, strong echoes of a complicated shape appear, these are based on fish circling after moving to the first fishtank 11.

The echo tracking module 45 and the counting module 46 described above substantially performs processing to count the rightwardly-descending thin-line echoes. By the above configuration, the number of fish which moves from the second fishtank 12 to the first fishtank 11 can be measured accurately.

In this embodiment, the bottom of the interior space of the first fishtank 11 (i.e., partition net 65) is located deeper than the lowermost part of the opening formed in the opening frame 71. Therefore, the fish can be counted by appropriately considering the habit of the fish that is going to dive into a deep place immediately after passing through the opening frame 71.

The fish is counted one after another, and the number of fish displayed on the display unit 5 increases in real time. The worker lowers the bottom of the net 63 of the second fishtank 12 which has been lifted by the crane at a timing when the number of fish displayed on the display unit 5 reaches the scheduled number. Note that, it is preferable that the processor 4 is provided with a setting module which enables the setting of the count number, and an informing module which informs the worker about the timing at which the count number setting is reached by light, sound, etc., in order to enhance convenience. Moreover, instead of lowering the bottom of the net 63 of the second fishtank 12, the movement of the fish from the second fishtank 12 to the first fishtank 11 can be stopped also by closing the opening frame 71 by a suitable component, such as a net.

By having the above configuration, the number of fish can be counted with a simple configuration at low cost by using the ultrasonic transducer 2 which is normally used by the fish finder. Moreover, since the equipment is simple, a maintenance work can also be performed easily.

Further, according to the fish counting system 10 of this embodiment, since the number of fish can be measured using the fishtanks which are normally used, without the need of a fishtank which is dedicated for the counting, the convenience can be improved.

This fish counting system 10 is applicable to any kind of fish, as long as the fish has a size so that it can pass through the path 13 (in more detail, the opening of the opening frame 71). Therefore, various kinds of fish can be flexibly counted.

If the path 13 connecting the second fishtank 12 with the first fishtank 11 is narrow, fish dislikes passing therethrough. Therefore, it takes a long period of time when performing the work to divide the fish culture from one fishtank into a plurality of fishtanks. In this regard, in this embodiment, even at the narrowest part of the path 13 (i.e., inside the opening frame 71), a cross-section of the portion cut in a plane perpendicular to the passing direction of the fish is a square having a length of 1m and a width of 1m, so that a plurality of fish can pass through the portion simultaneously. Therefore, the work involving counting can be performed smoothly.

Note that, if the plurality of fish simultaneously pass through the ultrasonic beam 9, it becomes a cause of an increase in error because the echoes overlap with each other, which leads to more possibility of omission in the count. However, since the probability of the echoes overlap with each other can be statistically estimated beforehand, the fall of the measurement accuracy can be prevented appropriately by the processor 4 performing a correction to multiply the counted result by a suitable magnification.

As described above, the fish counting device 1 of this embodiment includes the ultrasonic transducer 2 and the processor 4. The ultrasonic transducer 2 transmits the ultrasonic beam 9 underwater in the first fishtank 11 connected with the second fishtank 12 through the path 13, and is provided with the transducer element arranged in the single channel. The transducer element is disposed at the position where the ultrasonic beam 9 does not intersect the path 13. The processor 4 outputs to the ultrasonic transducer 2 the transmission signal to drive the ultrasonic transducer 2, and acquire the number of fish passing through the ultrasonic beam 9 and moving from the path 13 to the first fishtank 11 based on the echo signal inputted from the ultrasonic transducer 2 that received the reflection wave.

Therefore, the number of fish which moves from the second fishtank 12 to the first fishtank 11 via the path 13 can be measured with the simple configuration, without being influenced by the net etc. constituting the path 13.

Although the suitable embodiment of the present disclosure is described above, the above configuration may be changed as follows, for example.

Although the above embodiment has the configuration of counting the number of echo sources which are able to be tracked, the fish may be counted by other methods.

For example, the number of echoes of which the peak of the envelope is larger than a given value may be added for every ping, and the value after the addition may be divided by a predetermined average number of fish appearing pings to acquire the number of fish which passed the ultrasonic beam 9.

Alternatively, a volume backscattering strength which is a known parameter may be calculated based on the echo signal, thereby estimating density of fish, and the number of fish passing through the ultrasonic beam 9 may be acquired based on the density and the swimming speed of the fish measured separately. The swimming speed of the fish can be detected, for example, by using a fish finder of a known split-beam type or a Doppler sonar.

It is preferable that the directivity of the ultrasonic beam 9 in the direction perpendicular to the opening plane formed in the opening frame 71 is set narrow as illustrated in Fig. 2, because overlap of echoes is less likely to occur. Note that, for example, if the swimming speed of the fish is fast, the omission in detection can be prevented by setting the directivity wide. Accordingly, it is preferable that the directivity of the ultrasonic beam 9 can be changed according to the fish species etc.

In the above embodiment, the path 13 is formed by connecting the net 63 of the first fishtank 11 with the net 63 of the second fishtank 12 through the connection net 67 in the shape of a tunnel. However, for example, the passage restriction frame 70 may be disposed so that the opening frame 71 is located between the net 63 of the first fishtank 11 and the net 63 of the second fishtank 12, a rectangular opening is formed in both the nets 63, and the openings are fixed to the opening frame 71 (in other words, the openings are connected directly) so that two nets 63 are brought closer, to form the path. In this case, the first fishtank 11 is connected with the second fishtank 12 through a very short path.

The ultrasonic transducer 2 may be, for example, fixed to a suitable jig etc. fixed to the frame 61, instead of being fixed to the pier 64. The casing 15 may be, for example, installed on a raft (not illustrated) floating adjacent to the first fishtank 11, instead of the pier 64.

The passage restriction frame 70 may be configured to be extendable and contractable to suitably change the size of the opening formed in the opening frame 71.

The shape of the opening formed in the opening frame 71 (i.e., the opening at the termination part of the path 13) may be, for example, a circle, instead of the rectangle.

The casing 15 may be installed at a location other than the pier 64. For example, the casing 15 may be installed on a ship or a raft brought alongside the first fishtank 11 or the second fishtank 12.

Instead of the battery 6, the electric power may be supplied from an external power source to the transmitter/receiver 3, the processor 4, the display unit 5, etc. The external power source may be, for example, a power source provided to the ship etc.

The first fishtank 11 and the second fishtank 12 may have a suitable shape, without being limited to the configuration described above. For example, it is possible to remove the partition net 65 of the first fishtank 11.

In the above embodiment, although the fish counting device is described based on the net-type fishtank, fishtanks other than the net type may also be used. For example, a box type, basket type, ship-shaped type, or ditch type fishtank may be used.

### DESCRIPTION OF REFERENCE CHARACTERS

- 1: Fish Counting Device
- 2: Ultrasonic Transducer
- 4: Processor
- 9: Ultrasonic Beam
- 10: Fish Counting System
- 11: First Fishtank
- 12: Second Fishtank
- 13: Path

## Claims

1. A fish counting system, comprising:
a first fish tank (11);
a second fish tank (12);
a path (13), wherein the path (13) is formed by connecting an opening of the first fish tank with an opening of the second fish tank directly or through a tunnel; and
a fish counting device (1), the fish counting device comprising:
an ultrasonic transducer (2) arranged to transmit an ultrasonic beam (9) underwater in the first fish tank (11) and to receive a reflection wave, the ultrasonic transducer (2) being provided with a transducer element arranged in a single channel, the transducer element being disposable at a position where the ultrasonic beam (9) does not intersect the path (13); and
a processor (4) arranged to output to the ultrasonic transducer (2) a transmission signal to drive the ultrasonic transducer, and to receive an echo signal from the ultrasonic transducer (2) that received the reflection wave,
wherein the processor (4) is arranged to track an echo moving deeper as time passes, to count tracked echoes moving deeper as time passes, and to acquire a number of fish passing through the ultrasonic beam (9) and moving from the path (13) to the first fish tank (11) based on the counted tracked echoes.

2. The fish counting system of claim 1, wherein the ultrasonic beam (9) is a fan beam having a fan shape that spreads in a width direction as the ultrasonic beam moves away from the ultrasonic transducer.

3. The fish counting system of claim 2, wherein the fan beam is disposable substantially parallel to an opening that connects the path (13) to the first fish tank (11).

4. The fish counting system of claim 3, wherein the fan beam has a wide directivity in a direction parallel to the opening and a narrow directivity in a direction perpendicular to the opening.

5. The fish counting system of any of claims 2 to 4, wherein a directivity of the fan beam is changeable according to a species of the fish.

6. The fish counting system of any of the preceding claims, wherein the processor (4) counts the tracked echoes whose moving speed in a depth direction satisfies a given condition.

7. The fish counting system of any of the preceding claims, wherein the processor (4) counts the tracked echoes whose change in echo intensity satisfies a given condition.

8. The fish counting system of any of the preceding claims, wherein the processor (4) counts echoes based on the echo signal, corrects the counted echoes, and acquires the number of fish that move from the path (13) to the first fish tank (11) based on the corrected counted echoes.

9. The fish counting system of any of the preceding claims, wherein the ultrasonic transducer (2) is a single ultrasonic transducer.

10. The fish counting system of any of the preceding claims, wherein a bottom of the first fish tank (11) is located deeper than a deepest part of an opening that connects the path (13) to the first fish tank (11).

11. The fish counting system of any of the preceding claims, wherein a cross-section of a plane cutting perpendicularly a passing direction of the fish at a location where the path (13) becomes the narrowest has a size through which a plurality of fish is able to pass simultaneously.

12. A method of counting fish, comprising:
connecting a first fish tank (11) with a second fish tank (12) through a path (13) through which fish are able to pass;
disposing an ultrasonic transducer (2) provided with a transducer element arranged in a single channel for transmitting an ultrasonic beam (9) underwater in the first fish tank (11) at a position where the ultrasonic beam does not intersect the path;
outputting a transmission signal to drive the ultrasonic transducer (2);
receiving an echo signal from the ultrasonic transducer (2) that received a reflection wave;
tracking an echo moving deeper as time passes;
counting tracked echoes moving deeper as time passes; and
acquiring a number of fish passing through the ultrasonic beam (9) and moving from the path (13) to the first fish tank (11) based on the counted tracked echoes.

## Patentansprüche

1. Fischzählsystem, das Folgendes umfasst:
einen ersten Fischtank (11);
einen zweiten Fischtank (12);
eine Bahn (13), wobei die Bahn (13) durch Verbinden einer Öffnung des ersten Fischtanks mit einer Öffnung des zweiten Fischtanks direkt oder durch einen Tunnel gebildet wird; und
eine Fischzählvorrichtung (1), wobei die Fischzählvorrichtung Folgendes umfasst:
einen Ultraschallwandler (2), ausgelegt zum Senden eines Ultraschallstrahls (9) unter Wasser in den ersten Fischtank (11) und zum Empfangen einer Reflexionswelle, wobei der Ultraschallwandler (2) mit einem in einem einzigen Kanal angeordneten Wandlerelement versehen ist, wobei das Wandlerelement an einer Position angeordnet werden kann, an der der Ultraschallstrahl (9) die Bahn (13) nicht schneidet; und
einen Prozessor (4), ausgelegt zum Ausgeben eines Sendesignals an den Ultraschallwandler (2), um den Ultraschallwandler anzusteuern, und zum Empfangen eines Echosignals von dem Ultraschallwandler (2), der die Reflexionswelle empfangen hat,
wobei der Prozessor (4) zum Verfolgen eines Echos ausgelegt ist, das sich mit der Zeit tiefer bewegt, um verfolgte Echos zu zählen, die sich mit der Zeit tiefer bewegen, und um auf der Basis der gezählten verfolgten Echos eine Anzahl von Fischen zu erfassen, die den Ultraschallstrahl (9) passieren und sich von der Bahn (13) zum ersten Fischtank (11) bewegen.

2. Fischzählsystem nach Anspruch 1, wobei der Ultraschallstrahl (9) ein Fächerstrahl mit einer Fächerform ist, die sich in einer Breitenrichtung ausbreitet, wenn sich der Ultraschallstrahl vom Ultraschallwandler weg bewegt.

3. Fischzählsystem nach Anspruch 2, wobei der Fächerstrahl im Wesentlichen parallel zu einer Öffnung angeordnet werden kann, die die Bahn (13) mit dem ersten Fischtank (11) verbindet.

4. Fischzählsystem nach Anspruch 3, wobei der Fächerstrahl eine breite Richtwirkung in einer Richtung parallel zur Öffnung und eine schmale Richtwirkung in einer Richtung lotrecht zur Öffnung hat.

5. Fischzählsystem nach einem der Ansprüche 2 bis 4, wobei eine Richtwirkung des Fächerstrahls je nach Fischart veränderbar ist.

6. Fischzählsystem nach einem der vorherigen Ansprüche, wobei der Prozessor (4) die verfolgten Echos zählt, deren Bewegungsgeschwindigkeit in einer Tiefenrichtung eine gegebene Bedingung erfüllt.

7. Fischzählsystem nach einem der vorherigen Ansprüche, wobei der Prozessor (4) die verfolgten Echos zählt, deren Echointensitätsänderung eine gegebene Bedingung erfüllt.

8. Fischzählsystem nach einem der vorherigen Ansprüche, wobei der Prozessor (4) Echos auf der Basis des Echosignals zählt, die gezählten Echos korrigiert und die Anzahl der Fische, die sich von der Bahn (13) zum ersten Fischtank (11) bewegen, auf der Basis der korrigierten gezählten Echos ermittelt.

9. Fischzählsystem nach einem der vorherigen Ansprüche, wobei der Ultraschallwandler (2) ein einzelner Ultraschallwandler ist.

10. Fischzählsystem nach einem der vorherigen Ansprüche, wobei ein Boden des ersten Fischtanks (11) tiefer liegt als ein tiefster Teil einer Öffnung, die die Bahn (13) mit dem ersten Fischtank (11) verbindet.

11. Fischzählsystem nach einem der vorherigen Ansprüche, wobei ein Querschnitt einer Ebene, die eine Passierrichtung der Fische an einer Stelle lotrecht schneidet, an der die Bahn (13) am engsten wird, eine solche Größe hat, dass mehrere Fische gleichzeitig passieren können.

12. Verfahren zum Zählen von Fischen, das Folgendes beinhaltet:
Verbinden eines ersten Fischtanks (11) mit einem zweiten Fischtank (12) durch eine Bahn (13), durch die Fische passieren können;
Anordnen eines Ultraschallwandlers (2), der mit einem in einem einzigen Kanal angeordneten Wandlerelement versehen ist, zum Senden eines Ultraschallstrahls (9) unter Wasser im ersten Fischtank (11) an einer Position, an der der Ultraschallstrahl die Bahn nicht schneidet;
Ausgeben eines Sendesignals zum Ansteuern des Ultraschallwandlers (2);
Empfangen eines Echosignals von dem Ultraschallwandler (2), der eine Reflexionswelle empfangen hat;
Verfolgen eines Echos, das sich mit der Zeit tiefer bewegt;
Zählen verfolgter Echos, die sich mit der Zeit tiefer bewegen; und
Erfassen, auf der Basis der gezählten verfolgten Echos, einer Anzahl von Fischen, die den Ultraschallstrahl (9) passieren und sich von der Bahn (13) zum ersten Fischtank (11) bewegen.

## Revendications

1. Système de comptage de poissons, comprenant :
un premier enclos à poissons (11) ;
un second enclos à poissons (12) ;
un chemin (13), le chemin (13) étant formé en reliant une ouverture du premier enclos à poissons à une ouverture du second enclos à poissons directement ou par l'intermédiaire d'un tunnel ; et
un dispositif de comptage de poissons (1), le dispositif de comptage de poissons comprenant :
un transducteur ultrasonore (2) conçu pour transmettre un faisceau ultrasonore (9) sous l'eau dans le premier enclos à poissons (11) et pour recevoir une onde de réflexion, le transducteur ultrasonore (2) étant muni d'un élément transducteur conçu en un seul canal, l'élément transducteur pouvant être disposé au niveau d'une position où le faisceau ultrasonore (9) ne croise pas le chemin (13) ; et
un processeur (4) conçu pour délivrer en sortie au transducteur ultrasonore (2) un signal de transmission afin de commander le transducteur ultrasonore et pour recevoir un signal d'écho en provenance du transducteur ultrasonore (2) qui a reçu l'onde de réflexion,
le processeur (4) étant conçu pour suivre un écho se déplaçant plus profondément au fil du temps, pour compter les échos suivis se déplaçant plus profondément au fil du temps et pour acquérir un nombre de poissons traversant le faisceau ultrasonore (9) et se déplaçant du chemin (13) vers le premier enclos à poissons (11) sur la base des échos suivis comptés.

2. Système de comptage de poissons selon la revendication 1, dans lequel le faisceau ultrasonore (9) est un faisceau en éventail qui s'étend dans le sens de la largeur à mesure que le faisceau ultrasonore s'éloigne du transducteur ultrasonore.

3. Système de comptage de poissons selon la revendication 2, dans lequel le faisceau en éventail peut être disposé sensiblement parallèlement à une ouverture qui relie le chemin (13) au premier enclos à poissons (11).

4. Système de comptage de poissons selon la revendication 3, dans lequel le faisceau en éventail a une large directivité dans une direction parallèle à l'ouverture et une directivité étroite dans une direction perpendiculaire à l'ouverture.

5. Système de comptage de poissons selon l'une quelconque des revendications 2 à 4, dans lequel une directivité du faisceau en éventail peut être modifiée selon une espèce des poissons.

6. Système de comptage de poissons selon l'une quelconque des revendications précédentes, dans lequel le processeur (4) compte les échos suivis dont la vitesse de déplacement dans le sens de la profondeur satisfait à une condition donnée.

7. Système de comptage de poissons selon l'une quelconque des revendications précédentes, dans lequel le processeur (4) compte les échos suivis dont la variation de l'intensité d'écho satisfait à une condition donnée.

8. Système de comptage de poissons selon l'une quelconque des revendications précédentes, dans lequel le processeur (4) compte les échos sur la base du signal d'écho, corrige les échos comptés et acquiert le nombre de poissons qui se déplacent du chemin (13) vers le premier enclos à poissons (11) sur la base des échos comptés corrigés.

9. Système de comptage de poissons selon l'une quelconque des revendications précédentes, dans lequel le transducteur ultrasonore (2) est un unique transducteur ultrasonore.

10. Système de comptage de poissons selon l'une quelconque des revendications précédentes, dans lequel un fond du premier enclos à poissons (11) est situé plus profondément qu'une partie la plus profonde d'une ouverture qui relie le chemin (13) au premier enclos à poissons (11).

11. Système de comptage de poissons selon l'une quelconque des revendications précédentes, dans lequel une section transversale d'un plan coupant perpendiculairement un sens de passage des poissons au niveau d'un emplacement où le chemin (13) devient le plus étroit a une taille par laquelle une pluralité de poissons peut passer simultanément.

12. Procédé de comptage de poissons, comprenant les étapes consistant à :
relier un premier enclos à poissons (11) à un second enclos à poissons (12) par l'intermédiaire d'un chemin (13) par lequel des poissons peuvent passer ;
disposer un transducteur ultrasonore (2) muni d'un élément transducteur conçu en un seul canal pour transmettre un faisceau ultrasonore (9) sous l'eau dans le premier enclos à poissons (11) au niveau d'une position où le faisceau ultrasonore ne croise pas le chemin ;
délivrer en sortie un signal de transmission pour commander le transducteur ultrasonore (2) ;
recevoir un signal d'écho en provenance du transducteur ultrasonore (2) qui a reçu une onde de réflexion ;
suivre un écho se déplaçant plus profondément au fil du temps ;
compter les échos suivis se déplaçant plus profondément au fil du temps ; et
acquérir un nombre de poissons traversant le faisceau ultrasonore (9) et se déplaçant du chemin (13) vers le premier enclos à poissons (11) sur la base des échos suivis comptés.
